# EUROPÄISCHE PATENTSCHRIFT

(11) **EP 0 848 035 B1**
(45) Veröffentlichungstag und Bekanntmachung des Hinweises auf die Patenterteilung: **10.10.2001**
(21) Anmeldenummer: 97120222.1
(22) Anmeldetag: 19.11.1997
(51) Int. Cl.: C08K 13/02, C08L 67/06

(54) **Flammwidrige, ungesättigte Polyesterharze**
Flame retardant unsaturated polyester resins
Résines de polyesters insaturés ignifuges

(30) Priorität: 11.12.1996 DE 19651471
(43) Veröffentlichungstag der Anmeldung: 17.06.1998
(73) Patentinhaber: Clariant GmbH, 65929 Frankfurt am Main (DE)
(72) Erfinder: Hörold, Sebastian, Dr., 50374 Erftstadt (DE); Arnsmann, Guido, 50354 Hürth (DE)

(56) Entgegenhaltungen:
- GB-A- 2 250 291
- US-A- 4 957 950
- DATABASE WPI Section Ch, Week 8706 Derwent Publications Ltd., London, GB; Class A23, AN 87-040168 XP002059568 & JP 61 296 057 A (HITACHI CHEM CO LTD)
- DATABASE WPI Section Ch, Week 9637 Derwent Publications Ltd., London, GB; Class A13, AN 96-368436 XP002059569 & JP 08 176 450 A (SUMITOMO BAKELITE CO LTD)

## Beschreibung

Die Erfindung betrifft halogenfreie und flammwidrige ungesättigte Polyesterharze, ein Verfahren zu deren Herstellung und ihre Verwendung.

Bauteile aus mit Glasfasern verstärkten ungesättigten Polyesterharzen zeichnen sich durch ihre guten mechanischen Eigenschaften, ihre geringe Dichte, weitgehende Chemikalienresistenz und ihre ausgezeichnete Oberflächenqualität aus. Diese Eigenschaften sowie der günstige Preis haben dazu geführt, daß sie in den Anwendungsbereichen Schienenfahrzeuge, Bauwesen und Luftfahrt zunehmend die metallischen Werkstoffe verdrängen.

Abhängig vom jeweiligen Anwendungsgebiet werden an die ungesättigten Polyesterharze unterschiedliche Anforderungen hinsichtlich mechanischer, elektrischer und brandschutztechnischer Eigenschaften gestellt. So wurden in jüngerer Zeit insbesondere im Bereich Schienenfahrzeuge die Brandschutzanforderungen erheblich verschärft.

Es ist bekannt, ungesättigte Polyesterharze dadurch flammwidrig einzustellen, daß man brom- oder chlorhaltige Säuren oder Alkoholkomponenten verwendet. Beispiele hierfür sind Hexachloroendomethylentetrahydrophthalsäure (HET-Säure), Tetrabromphthalsäure oder Dibromneopentylglykol. Als Synergist wird häufig Antimontrioxid verwendet.

In der JP-A-05245838 (CA 1993: 672700) werden zur Verbesserung der Flammwidrigkeit Aluminiumhydroxid, roter Phosphor und Antimontrioxid mit einem bromierten Harz kombiniert, eingesetzt. Nachteilig an solchen brom- oder chlorhaltigen Harzen ist, daß im Brandfall korrosive Gase entstehen, die zu erheblichen Schäden an elektronischen Bauteilen, etwa an Relais führen können. Von wesentlichem Nachteil ist auch, daß unter ungünstigen Bedingungen polychlorierte oder polybromierte Dibenzodioxine und -furane entstehen können.

Es besteht somit ein zunehmender Bedarf an halogenfreien und flammwidrigen ungesättigten Polyesterharzen, die dann zu flammwidrigen Endprodukten verarbeitet werden können.

Aus dem Stand der Technik ist bekannt, daß man Formmassen aus ungesättigten Polyesterharzen mit Füllstoffen wie etwa Aluminiumhydroxid ausrüstet. Durch die Wasserabspaltung aus dem Aluminiumhydroxid bei höheren Temperaturen wird hiermit eine gewisse Flammwidrigkeit erreicht. Bei sehr hohen Füllgraden von 150 bis 200 Teilen Aluminiumhydroxid pro 100 Teile ungesättigtes Polyesterharz kann dann ein Selbstverlöschen und eine geringe Rauchgasdichte erreicht werden. Nachteilig bei solchen Systemen ist das hohe spezifische Gewicht des gesamten Materials, das man beispielsweise durch den Zusatz von Hohlglaskugeln zu verringern sucht [Stauffer, G. et al., Kunststoffe 85 (1995) 4].

In der polnischen Patentanmeldung 159350 (CA 1995: 240054) werden Laminate mit bis zu 180 Teilen Magnesiumhydroxid pro 100 Teile ungesättigter Polyesterharze beschrieben. Bedingt durch die hohe Viskosität solcher ungehärteter ungesättigter Polyesterharze mit dem Aluminiumhydroxid oder Magnesiumhydroxid als Flammschutzmittel kann mit solchen Rezepturen nicht nach dem Injektionsverfahren gearbeitet werden.

Das vorgenannte Injektionsverfahren ist dadurch gekennzeichnet, daß zwischen 2 starren Formhälften Glasfaserverstärkungen gelegt werden und eine kalt-härtbare Reaktionsmasse nach dem Schließen der Formhälften in den von der Glasfaserverstärkung zum Teil ausgefüllten Hohlraum gespritzt wird. Naturgemäß ist hierfür eine pump- bzw. fließfähige ungesättigte Polyesterharz-Mischung (als Reaktionsmasse) Voraussetzung.

Als Verstärkungsmaterialien werden heutzutage überwiegend Textilglasmatten mit styrolunlöslichen Bindern eingesetzt. Geeignet sind auch Endlosmatten und Gewebe mit verschiedenen Flächengewichten.

Um den Füllstoffgehalt zu verringern, ist es möglich, Aluminiumhydroxid mit Ammoniumpolyphosphat zu kombinieren, wie in der DE-A-37 28 629 beschrieben.

Die Verwendung von rotem Phosphor als Flammschutzmittel für ungesättigte Polyesterharze beschreibt die JP-A-57016017 (CA 96 (22): 182248).

Eine Kombination von Aluminiumhydroxid, rotem Phosphor und Antimontrioxid als Flammschutzmittel für ungesättigte Polyesterharze wird in der JP-A-55094918 (CA 93 (24): 22152T) beschrieben.

Nach der PL-A-161333 (CA 1994: 632278) wird durch die Verwendung von Aluminiumhydroxid, Magnesiumhydroxid oder basisches Magnesiumcarbonat, rotem Phosphor und gegebenenfalls hochdisperser Kieselsäure eine geringe Rauchgasdichte und Zersetzungsprodukte von geringer Toxitität erhalten.

Schließlich beschreibt die DE-OS 21 59 757 die Verwendung von Melamin und Aluminiumhydroxid als Flammschutzmittel in ungesättigten Polyesterharzen.

Alle vorgenannten ungesättigten Polyesterharze sowie die zu ihrer Herstellung beschriebenen Verfahren weisen jedoch den erheblichen Nachteil auf, daß sie einen sehr hohen Füllstoffanteil enthalten und daher mittels den industriell weit verbreiteten Injektionsverfahren nicht zu den erwünschten Produkten verformt werden können. Sämtliche bisher bekannten Kombinationen von Aluminiumhydroxid mit anderen Flammschutzmitteln oder anderen Flammschutzmittelsystemen können auf diese Art und Weise nicht oder nur schwierig verarbeitet werden.

Es ist daher Aufgabe der vorliegenden Erfindung, halogenfreie und flammwidrige ungesättigte Polyesterharze zur Verfügung zu stellen, die bei einer Weiterverarbeitung in Endprodukte bereits bei einem geringen Füllstoffgehalt die in verschiedenen Bereichen geltenden Flammschutznormen erfüllen. Außerdem sollen die flammwidrigen ungesättigten Polyesterharze die Möglichkeit bieten, diese nach dem Injektionsverfahren weiterzuverarbeiten.

Die vorgenannte Aufgabe wird gelöst durch ungesättigte Polyesterharze der eingangs beschriebenen Art, dadurch gekennzeichnet, daß sie als Flammschutzmittel eine Kombination aus Aluminiumhydroxid, mindestens einer Stickstoff-Komponente und roten Phosphor enthalten, wobei es sich bei der Stickstoff-Komponente um Melamin oder Melaminderivate der Cyanursäure oder der Isocyanursäure, Melaminsalze, Dicyandiamid, Guanidinverbindungen oder um Kondensationsprodukte von Ethylenharnstoff mit Formaldehyd handelt.

Bevorzugt sind 10 bis 100 Masseteile Aluminiumhydroxid je 100 Masseteile ungesättigter Polyesterharze enthalten.

Bevorzugt sind 1 bis 20 Masseteile der Stickstoff-Komponente je 100 Masseteile ungesättigter Polyesterharze enthalten.

Bevorzugt enthalten die flammwidrigen ungesättigten Polyesterharze 1 bis 25 Masseteile roten Phosphor je 100 Masseteile ungesättigter Polyesterharze.

Bevorzugt enthält der rote Phosphor 0,1 bis 5 Masse% eines Oxidationsstabilisators und 0,5 bis 20 Masse% eines wasserunlöslichen, gegebenenfalls gehärteten Kunstharzes, welches die einzelnen Teilchen des roten Phosphors umhüllt.

Bevorzugt enthält das ungesättigte Polyesterharz
40 bis 75 Masseteile Aluminiumhydroxid,
1 bis 10 Masseteile roten Phosphor,
1 bis 5 Masseteile Melamin oder Melamincyanurat
je 100 Masseteile ungesättiger Polyesterharze.

Die vorliegende Aufgabe wird ebenfalls gelöst durch ein Verfahren zur Herstellung von halogenfreien und flammwidrigen ungesättigten Polyesterharzen, dadurch gekennzeichnet, daß man ungesättigte Polyersterharze mit einem Flammschutzmittel in Form einer Kombination aus Aluminiumhydroxid, mindestens einer Stickstoff-Komponente und rotem Phosphor vermischt, wobei es sich bei der Stickstoff-Komponente um Melamin oder Melaminderivate der Cyanursäure oder der Isocyanursäure, Melaminsalze, Dicyandiamid, Guanidinverbindungen oder um Kondensationsprodukte von Ethylenharnstoff mit Formaldehyd handelt.

Bevorzugt werden
10 bis 100 Masseteile Aluminiumhydroxid,
1 bis 25 Masseteile roten Phosphor und
1 bis 10 Masseteile Melamin oder Melamincyanurat als Kombination mit
100 Masseteile ungesättiger Polyesterharze vermischt.

Besonders bevorzugt werden
40 bis 75 Masseteile Aluminiumhydroxid,
1 bis 10 Masseteile roten Phosphor und
1 bis 5 Masseteile Melamin oder Melamincyanurat als Kombination mit
100 Masseteile ungesättiger Polyesterharze vermischt.

Die vorgenannte Aufgabe wird ebenfalls gelöst durch Formkörper, Laminate oder Beschichtungen, die die erfindungsgemäßen oder erfindungsgemäß hergestellten ungesättigten Polyesterharze enthalten.

Bevorzugt sind diese Formkörper, Laminate oder Beschichtungen durch Glasfasern verstärkt.

Ungesättigte Polyesterharze sind Polykondensationsprodukte aus gesättigten und ungesättigten Dicarbonsäuren oder deren Anhydriden mit Diolen. Die ungesättigten Polyesterharze werden gehärtet durch radikalische Polymerisation mit Initiatoren, wie beispielsweise Peroxiden und Beschleunigern. Die Doppelbindungen in der Polyesterkette reagieren dabei mit der Doppelbindung des copolymerisierbaren Lösungsmittelmonomers.

Die wichtigsten Dicarbonsäuren sind Maleinsäureanhydrid, Furmarsäure und Terephthalsäure. Am häufigsten wird als Diol 1,2-Propandiol eingesetzt. Daneben lassen sich auch Ethylenglykol, Diethylenglykol und Neopentylglykol verwenden. Als Monomer zur Vernetzung ist Styrol am weitesten verbreitet. Es ist beliebig mit den ungesättigten Polyesterharzen mischbar und läßt sich gut copolymerisieren, wobei der Styrolgehalt der ungesättigten Polyesterharzen üblicherweise zwischen 25 und 40 Gew.-% liegt.

Die Herstellung der flammwidrigen Formkörper, die später entsprechend geprüft werden, erfolgt beispielsweise dadurch, daß man ein ungesättigtes Polyesterharz mit einem Flammschutzsystem aus Aluminiumhydroxid, mindestens einer Stickstoff-Komponente und rotem Phosphor vermischt und die resultierende Mischung bei Drücken von 3 bis 10 bar und Temperaturen von 20 bis 60 °C preßt ("kalt-naß"). Es ist auch möglich, die resultierende Mischung bei Drücken von 3 bis 10 bar und Temperaturen von 80 bis 150 °C zu pressen ("warm-naß"). Weiterhin ist es möglich, aus der resultierenden Mischung bei Drücken von 50 bis 150 bar und Temperaturen von 150 bis 160 °C Kunstharzmatten zu fertigen.

In den Beispielen wurden folgende Verbindungen eingesetzt:
® Alpolit UP 002 BMT (Vianova Resins GmbH, Wiesbaden), ungesättigtes Polyesterharz, ca. 60 gew.-%ig in Styrol, Säurezahl max. 30 mg KOH/g, niedrigviskos (Viskosität 300 ± 50 mPa * s).
® Martinal ON 921 (Martinswerk GmbH, Bergheim), Aluminiumhydroxid mit niedrigem Viskositätsanstieg; die Teilchengröße beträgt > 60 % < 45 µm.
® Hostaflam RP 654 (Hoechst AG, Frankfurt/Main), mikroverkapselter, stabilisierter roter Phosphor in Form einer 50 gew.-%igen Dispersion in einem styrolfreien ungesättigten Polyesterharz. Die Dichte der Dispersion beträgt bei 20 °C 1,45 g/cm³, die Viskosität bei 25 °C und 50 U/min ca. 25 Pa * s.
® Plastisan B (3V Sigma, Bergamo, Italien), Melamincyanurat, Teilchengröße min. 95 % < 10 µm.

Kobaltbeschleuniger NL 49P (Akzo Chemie GmbH, Düren), Kobaltoktoatlösung in Dibutylphthalat mit einem Kobaltgehaltgehalt von 1 Masse%.

Butanox M 50 (Akzo Chemie GmbH, Düren), Methylethylketonperoxid, mit Dimethylphthalat phlegmatisiert, klare Flüssigkeit mit einem Aktiv-Sauerstoffgehalt von min. 9 Masse%.

### Herstellung der ungesättigten Polyesterharze und der Prüfkörper

Das ungesättigte Polyesterharz, die Flammschutzmittel und der Kobaltbeschleuniger werden mit einer Dissolverscheibe homogen vermsicht. Nach Zugabe des Peroxid-Starters (Butanox M50) wird nochmals homogenisiert. In einer beheizten Presse werden auf einer ®Hostaphan-Trennfolie und einem Stahlrahmen eine Lage Textilglas-Endlosmatte vom Flächengewicht 450 g/m² eingelegt.

Anschließend wird das Gemisch aus ungesättigtem Polyesterharz und Flammschutzmittel gleichmäßig verteilt und das entstandene Laminat mit einer Trennfolie abgedeckt.Bei einer Temperatur von 50 °C und während einer Stunde bei einem Preßdruck von 10 bar eine Preßplatte von 1,4 mm Dicke hergestellt.

Die Prüfung des Brandverhaltens erfolgte nach der Vorschrift von Underwriters Laboratories "Test for Flammability of Plastics Materials - UL 94" in der Fassung vom 02.05.1975 an Prüfkörpern von 127 mm Länge, 12,7 mm Breite und verschiedener Dicke.

Der Sauerstoffindex wurde in einer modifizierten Apparatur in Anlehnung an ASTD D 2863-74 bestimmt.

Tabelle 1 zeigt Vergleichsbeispiele mit jeweils alleiniger Verwendung von Aluminiumhydroxid, Melamincyanurat bzw. rotem Phosphor als Flammschutzmittel. Aus der Tabelle ist zu entnehmen, daß bei alleiniger Verwendung von Aluminiumhydroxid bis zu einer Konzentration von 175 Teilen auf 100 Teile ungesättigtes Polyesterharz keine V-0-Einstufung zu erreichen ist. Auch bei alleiniger Verwendung von Melamincyanurat ist bis zu einer Konzentration von 75 Teilen auf 100 Teile ungesättigtes Polyesterharz keine V-0-Einstufung zu erreichen.

Roter Phosphor wurde bis zu einer Konzentration von 15 Teilen auf 100 Teile ungesättigtes Polyesterharz geprüft, eine V-0-Einstufung war nicht zu erreichen. Höhere Gehalte an rotem Phosphor erscheinen aufgrund der Brennbarkeit des roten Phosphors nicht sinnvoll (Hierbei ist zu beachten, daß ®Hostaflam RP 654 eine 50 gew.-%ige Dispersion ist, so daß die in den Tabellen genannten Zahlen für die Konzentration an rotem Phosphor zu halbieren sind).

**Tabelle 1**

| (Vergleichsbeispiele): Brennverhalten von Laminaten aus ungesättigten Polyesterharzen nach UL 94 (30 Gew.-% Textilglas-Endlosmatte, Laminatdicke 1,5 mm) | | | | | |
|---|---|---|---|---|---|
| Beispiel Nr. | Flammschutzmittel Teile/100 Teile ungesättigtes Polyesterharz | Nachbrenndauer [s] nach 1. Beflammen | Nachbrenndauer [s] nach. 2. Beflammen | UL 94 Klassifizierung | LOI |
| 1 | 125 ATH * | 12 | verbrannt | n.k. *** | 0,3 |
| 2 | 150 ATH | 8 | 35 | n.k. | 0,33 |
| 3 | 175 ATH | 5 | 15 | V-1 | 0,37 |
| 4 | 5 Pᵣₒₜ (RP 654) | verbrannt | - | n.k. | 0,23 |
| 5 | 10 Pᵣₒₜ (RP 654) | verbrannt | - | n.k. | 0,25 |
| 6 | 15 Pᵣₒₜ (RP 654) | 15 | verbrannt | n.k. | 0,27 |
| 7 | 25 MC** (Plastisan B) | verbrannt | - | n.k. | 0,21 |
| 8 | 50 MC (Plastisan B) | 20 | verbrannt | n.k. | 0,24 |
| 9 | 75 MC (Plastisan B) | 10 | 35 | n.k. | 0,27 |

| | | | | | |
|---|---|---|---|---|---|
| _{*} ATH = Aluminiumtrihydrat | | | | | |
| _{**} MC = Melamincyanurat | | | | | |
| _{***} n.k. = nicht klassifiziert | | | | | |

In Tabelle 2 sind die Brandergebnisse von ungesättigten Polyesterharz-Laminaten mit rotem Phosphor und Aluminiumtrihydrat als Flammschutzmittel dargestellt. Auch durch diese Kombination war bis zu einem Gesamt-Flammschutzmittelgehalt von 105 Teilen auf 100 Teile ungesättigtes Polyesterharz keine V-0-Einstufung zu erreichen.

**Tabelle 2**

| (Vergleichsbeispiele): Brennverhalten von Laminaten aus ungesättigten Polyesterharzen (30 Gew.-% Textilglas-Endlosmatte, Laminatdicke 1,5 mm) Flammschutzmitel: roter Phosphor und Aluminiumtrihydrat | | | | | |
|---|---|---|---|---|---|
| Beispiel Nr. | Flammschutzmittel Teile/100 Teile ungesättigtes Polyesterharz | Nachbrenndauer [s] nach 1. Beflammen | Nachbrenndauer [s] nach 2. Beflammen | UL 94 Klassifizierung | LOI |
| 10 | 50 ATH* | 10 | verbrannt | n.k. | 0,27 |
| | 5 Pᵣₒₜ(RP 654) | | | | |
| 11 | 50 ATH | 5 | 25 | V-1 | 0,29 |
| | 10 Pᵣₒₜₜ(RP 654) | | | | |
| 12 | 100 ATH | 5 | 15 | V-1 | 0,31 |
| | 5 Prott(RP 654) | | | | |
| 13 | 100 ATH | < 1 | < 1 | V-0 | 0,33 |
| | 10 Pᵣₒₜₜ(RP 654) | | | | |

| | | | | | |
|---|---|---|---|---|---|
| _{*} ATH = Aluminiumtrihydrat | | | | | |

Die Tabelle 3 zeigt die erfindungsgemäße Kombination der drei Flammschutzmittel Aluminiumtrihydrat, Melamincyanurat und roten Phosphor. Hier ist durch Zusatz von insgesamt 67,5 Teilen fester Flammschutzmittel auf 100 Teile ungesättigtes Polyesterharz eine V-0-Einstufung bei einer Laminatdicke von 1,5 mm zu erreichen. Aufgrund des geringen Füllstoffgehaltes können diese ungesättigten Polyesterharz-Laminate im Injektionsverfahren hergestellt werden.
Anstelle von Melamincyanurat können auch andere organische Stickstoffverbindungen wie Melamin, Melaminphosphat, Guanidinphosphat oder Dicyandiamid eingesetzt werden.

**Tabelle 3**

| (Erfindung): Brennverhalten von Laminaten aus ungesättigten Polyesterharzen nach UL 94 (30 Gew.-% Textilglas-Endlosmatte, Laminatdicke 1,5 mm) Kombination aus Aluminiumtrihydrat, Melamincyanurat und rotem Phosphor als Flammschutzmittel | | | | | |
|---|---|---|---|---|---|
| Beispiel Nr. | Flammschutzmittel Teile/100 Teile ungesättigtes Polyesterharz | Nachbrenndauer [s] nach 1. Beflammen | Nachbrenndauer [s] nach 2. Beflammen | UL 94 Klassifizierung | LOI |
| 14 | 60 ATH | < 1 | < 1 | V-0 | 0,35 |
| | 12 Pᵣₒₜ (RP 654) | | | | |
| | 5 Melamincyanurat | | | | |
| 15 | 60 ATH | < 1 | < 1 | V-0 | 0,32 |
| | 12 Pᵣₒₜ (RP 654) | | | | |
| | 2 Melamincyanurat | | | | |
| 16 | 60 ATH | < 1 | < 1 | V-0 | 0,31 |
| | 12 Pᵣₒₜ (RP 654) | | | | |
| | 2,5 Melamincyanurat | | | | |

Insgesamt hat sich gezeigt, daß Aluminiumhydroxid, roter Phosphor und eine Stickstoffverbindung (Melamincyanurat), für sich allein geprüft, auch in höheren Konzentrationen, wenig wirksam sind.

Überraschenderweise wurde nun gefunden, daß eine erfindungsgemäße Kombination aus Aluminiumhydroxid,rotem Phosphor und einer Stickstoff-Verbindung bereits bei einer Konzentration von maximal 71 Teilen Flammschutzmittel auf 100 Teile ungesättigtes Polyesterharz eine V-0-Einstufung gemäß UL-96 Klassifizierung, erreicht.

## Patentansprüche

1. Halogenfreie und flammwidrige ungesättigte Polyesterharze, **dadurch gekennzeichnet, daß** sie als Flammschutzmittel eine Kombination aus Aluminiumhydroxid, mindestens einer Stickstoff-Komponente und roten Phosphor enthalten, wobei es sich bei der Stickstoff-Komponente um Melamin oder Mela-minderivate der Cyanursäure oder der Isocyanursäure, Melaminsalze, Dicyandiamid, Guanidinverbindungen oder um Komdensationsprodukte von Ethylenharnstoff mit Formaldehyd handelt.

2. Halogenfreie und flammwidrige ungesättigte Polyesterharze nach Anspruch 1, **dadurch gekennzeichnet, daß** sie 10 bis 100 Masseteile Aluminiumhydroxid je 100 Masseteile ungesättigter Polyesterharze enthalten.

3. Halogenfreie und flammwidrige ungesättigte Polyesterharze nach Anspruch 1 oder 2, **dadurch gekennzeichnet, daß** sie 1 bis 20 Masseteile der Stickstoff-Komponente je 100 Masseteile ungesättigter Polyesterharze enthalten.

4. Halogenfreie und flammwidrige ungesättigte Polyesterharze nach einem oder mehreren der Ansprüche 1 bis 3, **dadurch gekennzeichnet, daß** sie 1 bis 25 Masseteile roten Phosphor je 100 Masseteile ungesättigter Polyesterharze enthalten.

5. Halogenfreie und flammwidrige ungesättigte Polyesterharze nach Anspruch 4, **dadurch gekennzeichnet, daß** der rote Phosphor 0,1 bis 5 Masse-% eines Oxidationsstabilisators und 0,5 bis 20 Masse-% eines wasserunlöslichen, gegebenenfalls gehärteten Kunstharzes, welches die einzelnen Teilchen des roten Phosphors umhüllt, enthält.

6. Halogenfreie und flammwidrige ungesättigte Polyesterharze nach einem oder mehreren der Ansprüche 1 bis 5, **dadurch gekennzeichnet, daß** sie
40 bis 75 Masseteile Aluminiumhydroxid,
1 bis 10 Masseteile roten Phosphor und,
1 bis 5 Masseteile Melamin oder Melamincyanurat je 100 Masseteile ungesättiger Polyesterharze enthalten.

7. Verfahren zur Herstellung von halogenfreien und flammwidrigen ungesättigten Polyesterharzen, **dadurch gekennzeichnet, daß** man ungesättigte Polyesterharze mit einem Flammschutzmittel in Form einer Kombination aus Aluminiumhydroxid mindestens einer Stickstoff-Komponente und rotem Phosphor vermischt, wobei es sich bei der Stickstoff-Komponente um Melamin oder Melaminderivate der Cyanursäure oder der Isocyanursäure, Melaminsalze, Dicyandiamid, Guanidinverbindungen oder um Kondensationsprodukte von Ethylenharnstoff mit Formaldehyd handelt.

8. Verfahren nach Anspruch 7, **dadurch gekennzeichnet, daß** man
10 bis 100 Masseteile Aluminiumhydroxid,
1 bis 25 Masseteile roten Phosphor und
1 bis 20 Masseteile Melamin oder Melamincyanurat als Kombination mit 100 Masseteile ungesättiger Polyesterharze vermischt.

9. Verfahren nach Anspruch 7, **dadurch gekennzeichnet, daß** man
40 bis 75 Masseteile Aluminiumhydroxid,
1 bis 10 Masseteile roten Phosphor und
1 bis 5 Masseteile Melamin oder Melamincyanurat als Kombination mit 100 Masseteile ungesättiger Polyesterharze vermischt.

10. Formkörper, Laminate oder Beschichtungen aus ungesättigten Polyesterharzen nach einem oder mehreren der Ansprüche 1 bis 6 oder hergestellt mit den ungesättigten Polyesterharzen nach dem Verfahren der Ansprüche 7 bis 9.

11. Formkörper, Laminate oder Beschichtungen nach Anspruch 10, **dadurch gekennzeichnet, daß** sie durch Glasfasern verstärkt sind.

## Claims

1. A halogen-free and flame-retardant unsaturated polyester resin which contains, as flame retardant, a combination of aluminum hydroxide, at least one nitrogen component and red phosphorus, where the nitrogen component is melamine or melamine derivatives of cyanuric acid or of isocyanuric acid, or is melamine salts, dicyandiamide, guanidine compounds or condensation products of ethyleneurea with formaldehyde.

2. A halogen-free and flame-retardant unsaturated polyester resin as claimed in claim 1 which contains from 10 to 100 parts by weight of aluminum hydroxide per 100 parts by weight of unsaturated polyester resin.

3. A halogen-free and flame-retardant unsaturated polyester resin as claimed in claim 1 or 2 which contains from 1 to 20 parts by weight of the nitrogen component per 100 parts by weight of unsaturated polyester resin.

4. A halogen-free and flame-retardant unsaturated polyester resin as claimed in one or more of claims 1 to 3 which contains from 1 to 25 parts by weight of red phosphorus per 100 parts by weight of unsaturated polyester resin.

5. A halogen-free and flame-retardant unsaturated polyester resin as claimed in claim 4, wherein the red phosphorus contains from 0.1 to 5% by weight of an antioxidant and from 0.5 to 20% by weight of a water-insoluble synthetic resin which may, if desired, have been cured and which encapsulates the individual particles of the red phosphorus.

6. A halogen-free and flame-retardant unsaturated polyester resin as claimed in one or more of claims 1 to 5 which contains
from 40 to 75 parts by weight of aluminum hydroxide,
from 1 to 10 parts by weight of red phosphorus, and
from 1 to 5 parts by weight of melamine or melamine cyanurate
per 100 parts by weight of unsaturated polyester resin.

7. A process for preparing a halogen-free and flame-retardant unsaturated polyester resin, which comprises mixing an unsaturated polyester resin with a flame retardant in the form of a combination of aluminum hydroxide, at least one nitrogen component and red phosphorus, where the nitrogen component is melamine or melamine derivatives of cyanuric acid or of isocyanuric acid, or is melamine salts, dicyandiamide, guanidine compounds or condensation products of ethyleneurea with formaldehyde.

8. The process as claimed in claim 7, wherein
from 10 to 100 parts by weight of aluminum hydroxide,
from 1 to 25 parts by weight of red phosphorus and
from 1 to 20 parts by weight of melamine or melamine cyanurate are mixed as combination with 100 parts by weight of unsaturated polyester resin.

9. The process as claimed in claim 7, wherein
from 40 to 75 parts by weight of aluminum hydroxide,
from 1 to 10 parts by weight of red phosphorus and
from 1 to 5 parts by weight of melamine or melamine cyanurate are mixed as combination with 100 parts by weight of unsaturated polyester resin.

10. A shaped article, laminate or coating made from an unsaturated polyester resin as claimed in one or more of claims 1 to 6 or prepared using an unsaturated polyester resin by the process of claims 7 to 9.

11. A shaped article, laminate or coating as claimed in claim 10, which is reinforced by glass fibers.

## Revendications

1. Résines de polyester insaturées ignifuges et sans halogène, **caractérisées en ce qu'**elles contiennent comme agent ignifugeant une combinaison d'hydroxyde d'aluminium, d'au moins un composant azoté et du phosphore rouge, dans lesquelles il s'agit pour les composants azotés de mélamine ou de dérivés de mélamine de l'acide cyanurique ou de l'acide isocyanurique, de sels de mélamine, de dicyandiamide, de composés de guanidine ou de produits de condensation d'éthylène-urée avec le formaldéhyde.

2. Résines de polyester insaturées ignifuges et sans halogène selon la revendication 1, **caractérisées en ce qu'**elles contiennent de 10 à 100 parties en masse d'hydroxyde d'aluminium pour respectivement 100 parties en masse de résines de polyester insaturées.

3. Résines de polyester insaturées ignifuges et sans halogène selon la revendication 1 ou 2, **caractérisées en ce qu'**elles contiennent de 1 à 20 parties en masse du constituant azoté pour respectivement 100 parties en masse de résines de polyester insaturées.

4. Résines de polyester insaturées ignifuges et sans halogène selon une ou plusieurs des revendications 1 à 3, **caractérisées en ce qu'**elles contiennent de 1 à 25 parties en masse de phosphore rouge pour respectivement 100 parties en masse de résines de polyester insaturées.

5. Résines de polyester insaturées ignifuges et sans halogène selon la revendication 4, **caractérisées en ce que** le phosphore rouge contient de 0,1 à 5 % en masse d'un stabilisateur d'oxydation et de 0,5 à 20 % en masse d'une résine synthétique insoluble dans l'eau, éventuellement durcie, qui enveloppe les particules unitaires de phosphore rouge.

6. Résines de polyester insaturées ignifuges et sans halogène selon une ou plusieurs des revendications 1 à 5, **caractérisées en ce qu'**elles contiennent
de 40 à 75 parties en masse d'hydroxyde d'aluminium,
de 1 à 10 parties en masse de phosphore rouge, et
de 1 à 5 parties en masse de mélamine ou de cyanurate de mélamine, pour respectivement 100 parties en masse de résines de polyester insaturées.

7. Procédé pour la fabrication de résines de polyester insaturées ignifuges et sans halogène, **caractérisé en ce qu'**on mélange des résines de polyester insaturées avec un agent ignifugeant sous la forme d'une combinaison d'hydroxyde d'aluminium, d'au moins un constituant azoté et de phosphore rouge, dans lequel il s'agit pour le constituant azoté de mélamine ou de dérivés de mélamine de l'acide cyanurique ou de l'acide isocyanurique, de sels de mélamine, de dicyandiamide, de composés de guanidine ou de produits de condensation d'éthylèneurée avec le formaldéhyde.

8. Procédé selon la revendication 7, **caractérisé en ce qu'**on mélange
de 10 à 100 parties en masse d'hydroxyde d'aluminium,
de 1 à 25 parties en masse de phosphore rouge, et
de 1 à 10 parties en masse de mélamine ou de cyanurate de mélamine sous la forme d'une combinaison avec 100 parties en masse de résines de polyester insaturées.

9. Procédé selon la revendication 7, **caractérisé en ce qu'**on mélange
de 40 à 75 parties en masse d'hydroxyde d'aluminium,
de 1 à 10 parties en masse de phosphore rouge, et
de 1 à 5 parties en masse de mélamine ou de cyanurate de mélamine sous la forme d'une combinaison avec 100 parties en masse de résines de polyester insaturées.

10. Produits moulés, stratifiés ou revêtements constitués de résines de polyester insaturées selon une ou plusieurs des revendications 1 à 6 ou fabriqués avec les résines de polyester insaturées selon le procédé des revendications 7 à 9.

11. Produits moulés, stratifiés ou revêtements selon la revendication 10, **caractérisés en ce qu'**ils sont renforcés par des fibres de verre.
